# EUROPEAN PATENT SPECIFICATION

(11) **EP 2 808 132 B1**
(45) Date of publication and mention of the grant of the patent: **02.12.2015**
(21) Application number: 14168777.2
(22) Date of filing: 19.05.2014
(51) Int. Cl.: B25J 9/00, B25J 18/00, B23P 15/00

(54) **Connection member, manufacturing method of connection member, and robot**
Verbindungselement, Herstellungsverfahren eines Verbindungselements und Roboter
Élément de connexion, procédé de fabrication associé et robot

(30) Priority: 20.05.2013 JP 2013106499
(43) Date of publication of application: 03.12.2014
(73) Proprietor: Kabushiki Kaisha Yaskawa Denki, Kitakyushu-shi, Fukuoka 806-0004 (JP)
(72) Inventor: Shinabe, Shinji, Kitakyushu-shi, Fukuoka 806-0004 (JP)
(74) Representative: Viering, Jentschura & Partner Patent- und Rechtsanwälte

(56) References cited:
- EP-A1- 2 484 496
- JP-A- H10 202 561
- JP-A- 2010 149 166
- JP-A- 2012 061 545

## Description

### BACKGROUND

### 1. Technical Field

The present disclosure relates to a connection member, a manufacturing method of the connection member, and a robot.

### 2. Related Art

Conventionally, a robot arm provided to industrial robots, for example, is formed of a plurality of arm members connected to each other via joint mechanisms. The arm member is formed with an arm frame that functions as a connection member for supporting the joint mechanisms. For such arm frame, a sufficient strength and rigidity are required for reducing the load or vibration that is caused by the accelerated motion with a heavy object being held at its end.

For the arm frame, a cast part made of iron or aluminum alloy or a molded part of a steel plate is used. When a heavy object is held at the end of the arm frame, however, the moment of inertia increases at the base end. This prevents a faster motion of the robot. In order to increase the motion speed of the robot, a light-weight arm frame is used.

It is thus desirable for the arm frame of the robot to have a high strength and rigidity and be light weight. For example, the art disclosed in Japanese Patent Laid-open Gazette No. 2010-115732 focuses on the material of the arm frame. In this art, a fiber reinforced plastic having a high strength, a high rigidity, and a small specific gravity is applied to the arm frame.

For example, in taking into consideration of strength, workability, heat dispersion property, and cost, it is desired to achieve both high strength and light weight at the same time by utilizing the metal material such as the inexpensive steel plate rather than the fiber reinforced plastic for the material of the arm frame of the robot. For this purpose, a high tension steel plate, which is often used for automobiles and the like, may be applied to the arm frame.

In this case, a member of the joint mechanism (for example, a motor and a reduction gear) is firmly fixed by a bolt to the arm frame that is the connection member. In this case, however, at least a part to which the bolt is connected in the arm frame is formed to have a certain thickness. The increase in thickness of the arm frame is undesirable in terms of the weight reduction.

Document JP 10-202561 discloses a connection member for the legs of a biped robot, wherein an auxiliary member having an insertion hole for a screw is formed thicker than a main member. Nothing is said concerning the material used for the auxiliary member.

One of the purposes of the present disclosure is to provide a connection member that has a sufficient strength and rigidity and allows for the reduction in weight while using the steel plate as a material, a manufacturing method for manufacturing this connection member, and a robot.

### SUMMARY

A connection member includes: a main member formed by bending a plate made of a first material having a certain strength into a predetermined shape, and having a hole to which an object to be connected is mounted; and an auxiliary member formed of a second material having a smaller specific gravity than the first material and formed thicker than the main member, jointed around the hole of the main member, and having an insertion hole through which a fastening member for fastening the object to be connected is inserted.

### BRIEF DESCRIPTION OF DRAWINGS

FIG. 1A is a diagram illustrating a robot according to an embodiment;
FIG. 1B is a diagram illustrating the robot of FIG. 1A and a connection member according to the embodiment arranged in the robot;
FIG. 2 is a diagram illustrating the above-described connection member;
FIG. 3 is a diagram illustrating an example of a usage of the above-described connection member;
FIG. 4 is a development view of the above-described connection member;
FIG. 5A is a diagram illustrating an example of an insertion hole of the above-described connection member;
FIG. 5B is a diagram illustrating an example of an insertion hole of the above-described connection member;
FIG. 6 is a diagram illustrating a modification of an insertion hole of the above-described connection member; and
FIG. 7 is a diagram illustrating a modification of the usage of the above-described connection member.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A connection member according to one form of the embodiment has a main member and an auxiliary member jointed to the main member. The main member is formed by bending a plate made of a first material having a certain strength into a predetermined shape. The main member has a hole to which an object to be connected is mounted. The auxiliary member is formed of a second material having a smaller specific gravity than the first material and formed thicker than the main member, is jointed around the hole of the main member, and has an insertion hole through which a fastening member for fastening the object to be connected is inserted.

One form of the embodiment can provide the connection member that has a sufficient strength and rigidity and allows for the reduction in weight while using the steel plate as a material, a manufacturing method for manufacturing this connection member, and a robot.

The connection member, the manufacturing method of this connection member, and the robot according to one form of the present disclosure will be described in detail below by referring to the attached drawings. It is noted that the following embodiments are not intended to limit the art of the present disclosure.

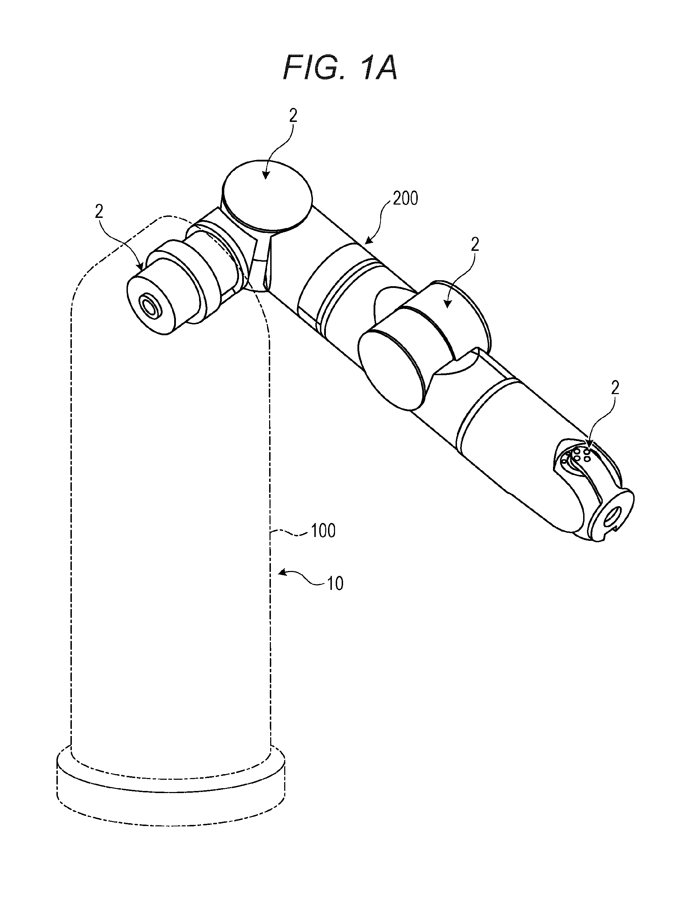

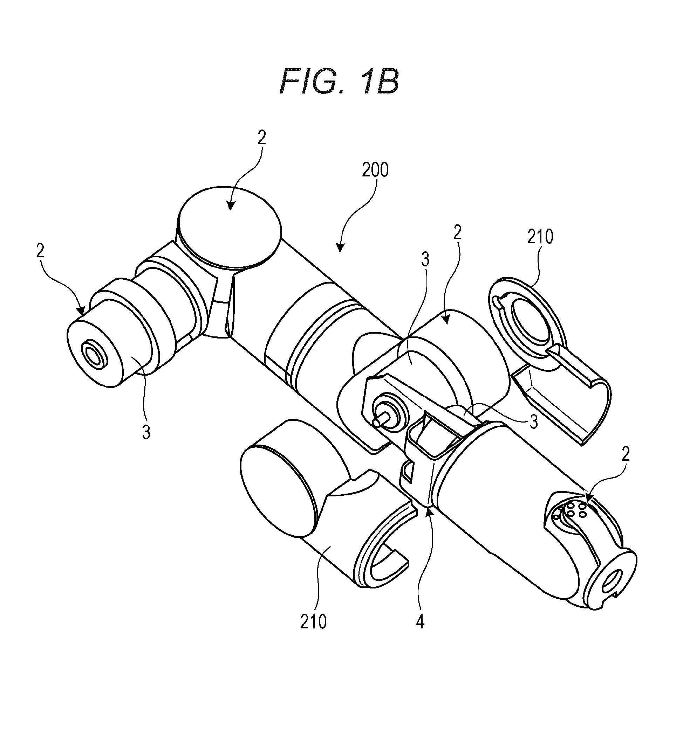

Firstly, the summary of the robot according to the present embodiment will be described by using FIG. 1A and FIG. 1B. FIG. 1A is a diagram illustrating a robot 10 according to the embodiment. FIG. 1B is a diagram illustrating the robot 10 and a connection member 4 according to the embodiment arranged in the robot 10.

As illustrated in FIG. 1A, the robot 10 of the present embodiment has a robot arm 200 provided to the upper end of a body part 100. The robot 10 of FIG. 1A has a single robot arm 200. However, the robot 10 may be a dual-arm robot having left and right robot arms 200.

In the robot arm 200, a plurality of arm parts are connected to each other in a rotatable manner via joints 2, respectively.

As illustrated in FIG. 1B, each arm part has a frame part forming the framework of the robot arm 200 and a cover part properly covering the frame part. As depicted, the frame part of the joint 2 functions as the connection member 4 to which actuators 3 are mounted. The actuator 3 attached to the connection member 4 is a motor with a reduction gear. Further, as illustrated in FIG. 1B, the connection member 4 is covered with covers 210.

As mentioned above, the robot 10 according to the present embodiment has the robot arm 200. In the robot arm 200, a plurality of arms are connected via the connection member 4 to which the actuators 3 are mounted.

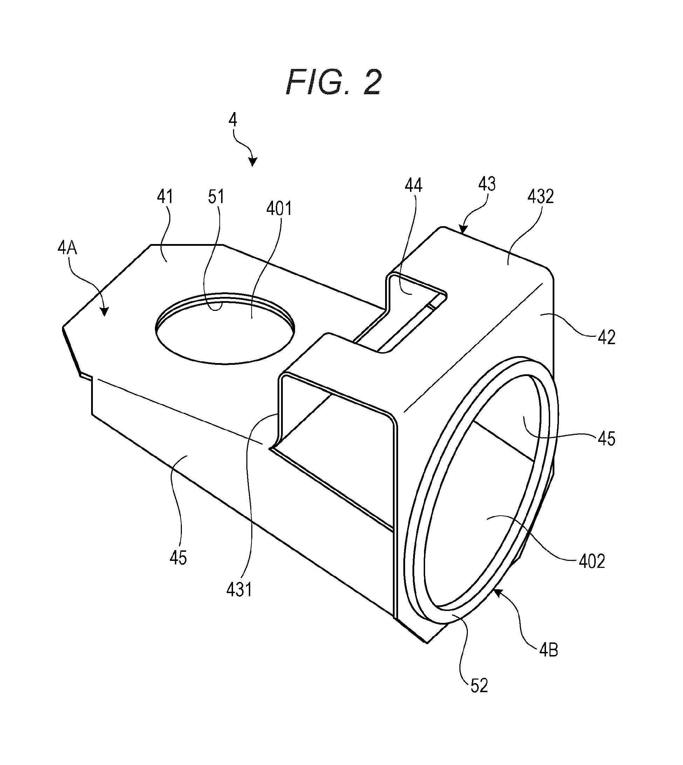

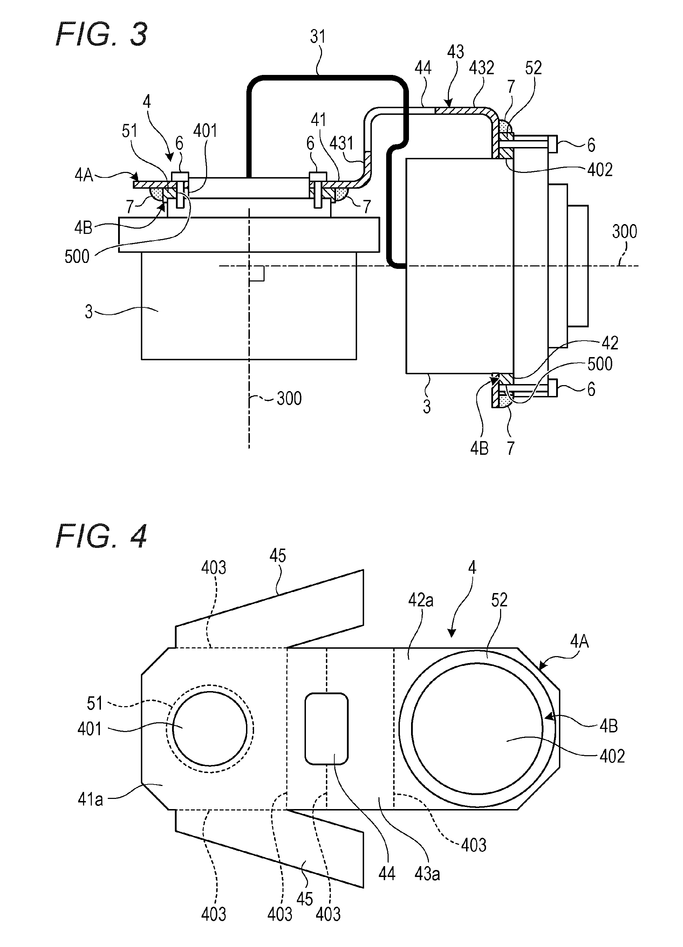

Here, the connection member 4 will be specifically described by referring to FIG. 2 to FIG. 4. FIG. 2 is a diagram illustrating the connection member 4. FIG. 3 is a diagram illustrating an example of a usage of the connection member 4. FIG. 4 is a development view of the connection member 4.

As illustrated in FIG. 2 and FIG. 3, the connection member 4 has a plate-shaped main member 4A and ring-shaped auxiliary members 4B. The main member 4A is formed of a first material having a certain strength. The main component of the first material is iron, for example, and formed in a plate shape. Each auxiliary member 4B is jointed around a hole formed in the main member 4A. Each auxiliary member 4B is formed of a second material having a smaller specific gravity than the first material (for example, a high tension steel) and formed in a ring shape.

For the main member 4A, a high tension steel plate is used, for example. In this case, the first material of the main member 4A is the high tension steel. For each auxiliary member 4B, an aluminum ring is used, for example. In this case, the second material of the auxiliary member 4B is the material whose main component is aluminum (for example, aluminum alloy).

The main member 4A is formed by bending the high tension steel plate into the predetermined shape. Specifically, the main member 4A has a first primary surface 41, a second primary surface 42, and a bent part 43 connecting the first primary surface 41 and the second primary surface 42. Each of the first primary surface 41 and the second primary surface 42 is provided with the hole to which the actuator 3 is mounted.

The bent part 43 includes a rise part 431 and a lateral part 432 as depicted. The rise part 431 extends from the first primary surface 41 substantially orthogonally to the first primary surface 41 and substantially in parallel to the second primary surface 42. On the other hand, the lateral part 432 is bent so as to be substantially orthogonal to the rise part 431. The lateral part 432 extends from the rise part 431 substantially in parallel to the first primary surface 41. In other words, the lateral part 432 extends from the second primary surface 42 substantially orthogonal to the second primary surface 42 and substantially in parallel to the first primary surface 41.

There is a rectangular connection hole 44 formed near the center of the bent part 43 so as to range from the rise part 431 to the lateral part 432. Further, as illustrated in FIG. 3, a cable 31 including a signal line and the like is inserted through the connection hole 44.

Further, the connection member 4 has left and right connection parts 45. The connection parts 45 are provided on the left and right edges of the first primary surface 41. The connection parts 45 are bent so as to be substantially orthogonal to the left and right edges of the first primary surface 41. The front end of the connection parts 45 are connected to the back surface of the second primary surface 42. These connection parts 45 allow the connection member 4 to function as a frame having a certain rigidity. In order to further enhance the strength, a reinforcement rib may be provided to the connection member 4, if necessary.

As described above, the actuator 3 provided to the robot arm 200 is the reduction gear-integrated motor that has a reduction gear. However, the actuator 3 is not limited to the motor in particular. Further, the actuator 3 is not limited to the reduction gear-integrated motor but may be a separate motor. In this case, while the reduction gear only being mounted to the connection member 4 as the actuator 3, the motor may be provided to the different portion of the robot arm 200.

As illustrated in FIG. 2, a first hole 401 is formed in the first primary surface 41 and a second hole 402 is formed in the second primary surface 42 as the holes to which the actuators 3 are mounted. In the arrangement of FIG. 2, the diameter of the second hole 402 is relatively larger than that of the first hole 401. However, these sizes are not limited in any way. The diameter of the first hole 401 and that of the second hole 402 may be substantially the same. Alternatively, the first hole 401 may be larger in diameter than the second hole 402.

A first ring member 51 that is the auxiliary member 4B is provided around the first hole 401 in a concentric manner with the first hole 401. Further, a second ring member 52 that is the auxiliary member 4B is provided around the second hole 402 in a concentric manner with the second hole 402. That is, the first ring member 51 is jointed to the first primary surface 41 so as to surround the first hole 401. The second ring member 52 is jointed to the second primary surface 42 so as to surround the second hole 402.

As illustrated in FIG. 3, the first ring member 51 is welded to the first primary surface 41. The second ring member 52 is welded to the second primary surface 42. In the figure, the reference numeral 7 represents a weld bead. Further, the first ring member 51 and the second ring member 52 that are the auxiliary members 4B are formed of the second material whose main component is aluminum. As depicted, the first ring member 51 and the second ring member 52 that are the auxiliary members 4B are formed so as to be thicker than the main member 4A. There are insertion holes 500 formed in the first ring member 51 and the second ring member 52. In each insertion hole 500, a bolt 6 is inserted that is fastening member for fastening the actuator 3 to the connection member 4.

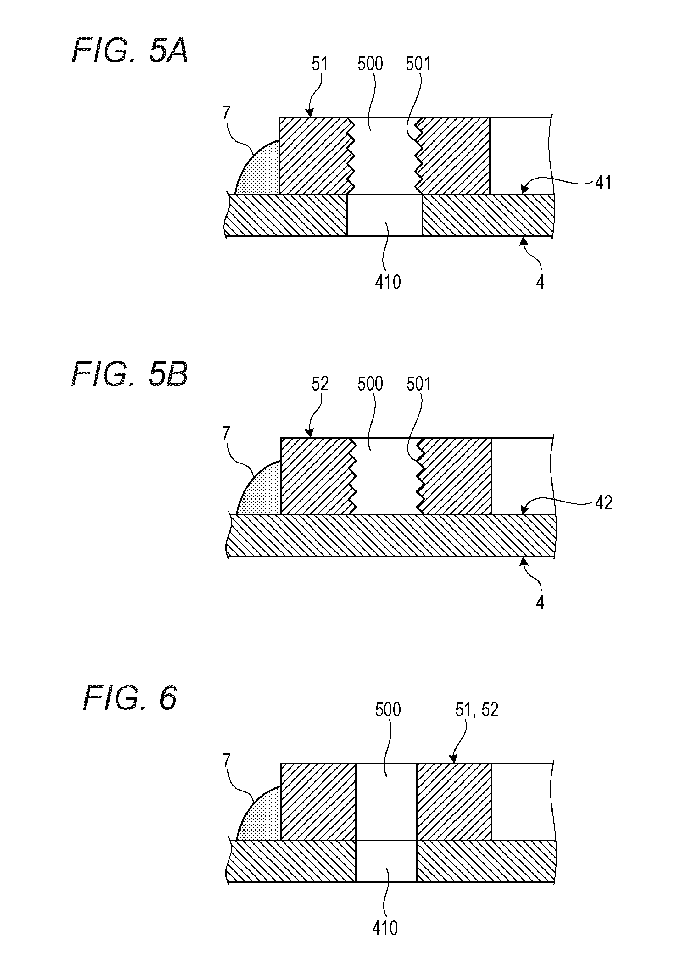

FIG. 5A and FIG. 5B are diagrams illustrating an example of the insertion hole 500. FIG. 6 is a diagram illustrating a modification of the insertion hole 500 of the connection member 4. As illustrated in FIG. 5A and FIG. 5B, an internal thread 501 is formed in the insertion hole 500. The actuator 3 is ensured to be fastened to the connection member 4 by screwing the bolt 6 into the internal thread 501.

In the connection member 4 according to the present embodiment, a main member-side insertion hole 410 is formed in the first primary surface 41 as the hole corresponding to the insertion hole 500 of the first ring member 51 (FIG. 5A). On the other hand, no hole corresponding to the insertion hole 500 of the second ring member 52 is formed in the second primary surface 42 (FIG. 5B). However, the hole corresponding to the insertion hole 500 of the second ring member 52 may be formed also in the second primary surface 42.

Further, as in the actuator 3 mounted on the first primary surface 41, the internal thread may be formed in the actuator 3, for example. In this case, as illustrated in FIG. 6, the internal thread 501 may not be formed in the insertion hole 500.

Further, the actuator 3 attached to the first hole 401 and the actuator 3 attached to the second hole 402 are disposed such that respective axial lines 300 are substantially orthogonal to each other. Specifically, an undercoating for the surface shaping is provided in advance to the surface of the first ring member 51 and the second ring member 52 that are formed thick. This allows the axial lines 300 of the actuators 3 mounted to the connection member 4 to be orthogonal to each other.

As discussed above, the first ring member 51 and the second ring member 52 have a function as the stages to which the actuators 3 are fixed. Furthermore, the first ring member 51 and the second ring member 52 serve to provide in advance a cutting allowance for securing a high accuracy of the orthogonality (for example, size tolerance of 0.03 mm or less) that is required to the robot arm 200.

As mentioned above, the actuators 3 are firmly fixed to the connection member 4 by using the bolts 6. For the connection of the bolts 6, the connection member 4 has a predetermined thickness. In the connection member 4 according to the present embodiment, the light-weight aluminum rings (the first ring member 51 and the second ring member 52) are used as the parts to which the actuators 3 are fastened. This and the use of the high tension steel plate for the main member 4A allow for the enhancement of the strength and the reduction of the weight at the same time.

The manufacturing method of the connection member 4 will be specifically described below.

Firstly, a high tension steel plate having a thickness of 2 mm or less (for example, 1.4 mm) is cut into a predetermined shape by a leaser cutting, for example. The main member 4A having a predetermined shape is formed as illustrated in FIG. 4 by applying a drilling to the high tension steel plate. The main member 4A is formed with a first primary surface forming part 41a, a second primary surface forming part 42a, a joint part 43a that joints the first primary surface forming part 41a and the second primary surface forming part 42a, and the left and right connection parts 45.

In addition, the first hole 401 is formed in the first primary surface forming part 41a and the second hole 402 is formed in the second primary surface forming part 42a. Then, the main member 4A is bent and thereby the rise part 431 and the lateral part 432 are formed in the joint part 43a.

Next, the first ring member 51 and the second ring member 52 made of the aluminum alloy are formed as the aluminum rings. Each thickness of the first ring member 51 and the second ring member 52 are greater than or equal to 2 mm. The insertion holes 500 are then formed in predetermined positions of the first ring member 51 and the second ring member 52. The internal threads 501 are formed by applying a tapping processing to the inner surfaces of the insertion holes 500. The depiction of the insertion holes 500 is omitted in FIG. 4. For the aluminum alloy, the A6061 material that can be welded may be used.

By the way, the specific dimensions for the thickness of the first ring member 51 and the second ring member 52 can be properly determined taking into consideration of the amount of the surface cutting and respective lengths of the internal threads 501 (see FIG. 5A and FIG. 5B).

Next, the first ring member 51 is arranged in a concentric manner with the first hole 401 of the main member 4A and the second ring member 52 is arranged in a concentric manner with the second hole 402 of the main member 4A. Then, the first ring member 51 and the second ring member 52 are jointed to the main member 4A by, for example, a MIG welding. That is, the first ring member 51 is welded to the main member 4A such that the first ring member 51 surrounds the first hole 401. The second ring member 52 is welded to the main member 4A such that the second ring member 52 surrounds the second hole 402.

Then, a bending process along bend lines 403 is applied to the main member 4A (the joint part 43a). Furthermore, the ends of the left and right connection parts 45 are welded to the back surface of the second primary surface 42. Thereby, the connection member 4 is assembled in the shape as illustrated in FIG. 3.

The undercoating for the surface shaping is then applied to the surfaces of the first ring member 51 and the second ring member 52 so that the shaft centers of the actuators 3 are substantially orthogonal to each other when the actuators 3 are mounted to the first primary surface 41 and the second primary surface 42. Further, in order to provide a desired strength to the connection member 4, a rib may be provided on the main member 4A, if necessary.

The desired connection member 4 can be obtained by the above-described process. That is, the manufacturing method of the connection member 4 according to the present embodiment includes the following (a) the main member forming process, (b) the auxiliary member forming process, (c) the jointing process, (d) the assembling process, (e) the insertion hole forming process, (f) the surface shaping process, and (g) the tapping process.

In (a) the main member forming process, the main member 4A of the predetermined shape is formed by using the high tension steel plate that is the first material having a certain strength. The main member 4A has the holes (the first hole 401 and the second hole 402) to which the actuators 3 that are the object to be connected are mounted.

In (b) the auxiliary member forming process, the aluminum alloy that is the second material having a smaller specific gravity than the first material is used to form the first ring member 51 and the second ring member 52 that are the auxiliary members 4B being thicker than the main member 4A.

In (c) the jointing process, the first ring member 51 and the second ring member 52 that are the auxiliary members 4B are jointed around the first hole 401 and the second hole 402 of the main member 4A, respectively.

In (d) the assembling process, the assembly into the predetermined form is made by bending the main member 4A.

In (e) the insertion hole forming process, the insertion holes 500 through which the bolts 6 for fastening the actuators 3 to the connection member 4 are inserted are formed in the first ring member 51 and the second ring member 52 that are the auxiliary members 4B.

In (f) the surface shaping process, the surface shaping processing is applied to the surfaces of the first ring member 51 and the second ring member 52.

In (g) the tapping process, the internal threads 501 are formed in the insertion holes 500.

The connection member 4 obtained through the above-described processes has a sufficient strength and rigidity. Furthermore, the connection member 4 can be significantly reduced in weight (for example, by 60%) compared to the frame formed of the aluminum casting used for the robot arm 200.

It is noted that the insertion hole forming process for forming the insertion holes 500 in the first ring member 51 and the second ring member 52 may be performed after or before the jointing process for jointing the first ring member 51 and the second ring member 52 to the main member 4A.

The connection member 4 according to the present embodiment is arranged such that two actuators 3 can be mounted thereto. However, the number of the actuators 3 to be mounted is not limited in any way.

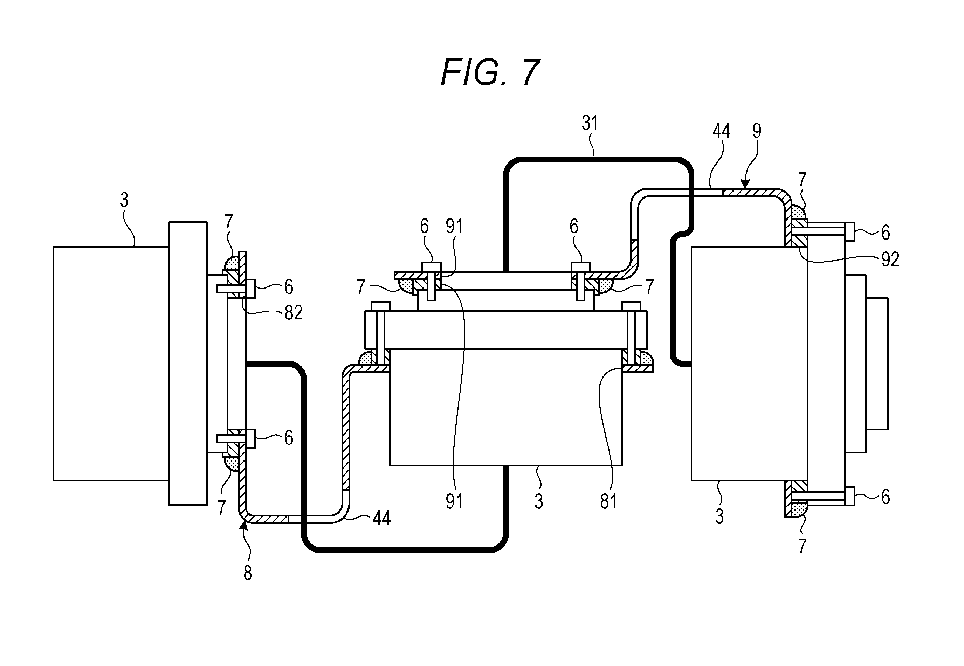

Further, the connection member 4 may be used separately. Further, multiple connection members 4 may be used in combination. FIG. 7 is a diagram illustrating a modification of the usage of the connection member. It is noted that, for the modification illustrated in FIG. 7, the same reference numerals are provided to the same components as those in the above-described embodiment, and their description will be omitted.

As illustrated in FIG. 7, a first connection member 8 and a second connection member 9 may be prepared to mount three actuators 3 thereto. That is, one actuator 3 is mounted by utilizing a share hole 81 of the first connection member 8 and a share hole 91 of the second connection member 9. The remaining actuators 3 are mounted to other mounting holes 82 and 92, respectively. It is noted that, in this case, the share holes 81 and 91 and other mounting holes 82 and 92 may include a hole formed in the high tension steel plate and an aluminum alloy ring member jointed to the high tension steel plate so as to surround the hole.

Further, in the example of the present embodiment, the connection member 4 is applied to the joint part 2 of the robot arm 200. However, the connection member 4 can be properly applied to the member, for example, that has the structure in which a pair of rings is connected in a rotatable manner with the use of the actuators such as motors.

Further advantages and modifications can be readily derived by those skilled in the art. Therefore, broader forms of the present disclosure are not limited to the specific details and the exemplary embodiments that have been illustrated and described above. Various modifications are thus possible without departing from the concept defined by the claims.

It is noted that the connection member, the robot, and the manufacturing method of the connection member of the present disclosure may be a first to a fifth connection members, a first robot, and manufacturing methods of a first and a second connection member.

The first connection member includes a main member formed of a first material having a strength and shaped in a plate, provided with a hole to which an object to be connected is mounted, and bent in a predetermined shape, and an auxiliary member formed of a second material having a smaller specific gravity than the first material and formed thicker than the main member, jointed around the hole of the main member, and formed with an insertion hole through which a fastening member for fastening the object to be connected is inserted.

In the second connection member in the first connection member, the main member is a high tension steel plate formed of the first material whose main component is iron, the auxiliary member is a ring member formed of the second material whose main component is aluminum, and the auxiliary member is welded to the main member.

In the third connection member in the second connection member, the ring member is jointed so as to surround the hole.

In the fourth connection member in any one of the first to the third connection members, the fastening member is a bolt and an internal thread is formed in the insertion hole of the auxiliary member.

In the fifth connection member in any one of the first to the third connection members, the object to be connected is an actuator having both of or one of a motor and a reduction gear.

The first robot has the fifth connection member in which a plurality of arms is connected via the connection member.

A manufacturing method of the first connection member includes a main member forming process for using a first material having a predetermined strength to form a main member of a predetermined shape having a hole through which an object to be connected is mounted, an auxiliary member forming process for using a second material having a smaller specific gravity than the first material to form an auxiliary member that is thicker than the main member, a jointing process for jointing the auxiliary member around the hole of the main member, an assembling process for assembling the main member by bending it into a predetermined shape, an insertion hole forming process for forming in the auxiliary member an insertion hole through which a fastening member for fastening the object to be connected is inserted, a surface shaping process for applying a surface shaping process to a surface of the auxiliary member, and a tapping process for forming an internal thread in the insertion hole.

In a manufacturing method of the second connection member in the manufacturing method of the first connection member, the main member is a high tension steel plate formed of the first material whose main component is iron, the auxiliary member is an aluminum ring formed of the second material whose main component is aluminum, and the jointing process welds the aluminum ring to the high tension steel plate.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A connection member (4) comprising:
a main member (4A) formed by bending a plate made of a first material having a certain strength into a predetermined shape, and having a hole (401, 402) to which an object to be connected is mounted; and
an auxiliary member (4B) formed thicker than the main member, jointed around the hole of the main member, and having an insertion hole (500) through which a fastening member for fastening the object to be connected is inserted, **characterised in that**
the auxiliary member (4B) is formed of a second material having a smaller specific gravity thant the first material.

2. The connection member according to claim 1, wherein
the main member is formed from a high tension steel plate formed of the first material whose main component is iron,
the auxiliary member is a ring member (51, 52) formed of the second material whose main component is aluminum, and
the auxiliary member is welded to the main member.

3. The connection member according to claim 1 or 2, wherein
the main member has a first primary surface (41), a second primary surface (42), and a bent part (43) connecting the first primary surface to the second primary surface, and
each of the first primary surface and the second primary surface is formed with the hole.

4. The connection member according to claim 3, wherein the bent part includes
a rise part (431) extending from the first primary surface substantially orthogonally to the first primary surface and substantially in parallel to the second primary surface, and
a lateral part (432) extending from the second primary surface substantially orthogonally to the second primary surface and substantially in parallel to the first primary surface.

5. The connection member according to claim 4, wherein a connection hole (44) is formed so as to range from the rise part to the lateral part.

6. The connection member according to any one of claims 3 to 5 further comprising left and right connection parts (45) provided to left and right edges of the first primary surface so as to be substantially orthogonal to the left and right edges, wherein front ends of the connection parts are connected to a back surface of the second primary surface.

7. The connection member according to claim 2, wherein the ring member is jointed so as to surround the hole.

8. The connection member according to any one of claims 1 to 7, wherein the fastening member is a bolt (6) and an internal thread (501) is formed in the insertion hole of the auxiliary member.

9. The connection member according to any one of claims 1 to 8, wherein the object to be connected is an actuator (3) comprising both of or one of a motor and a reduction gear.

10. A robot (10) including:
the connection member according to claim 9; and
a plurality of arm members connected via the connection member.

11. A manufacturing method of a connection member, the manufacturing method including:
forming a main member (4A) of a predetermined shape having a hole (401, 402) to which an object to be connected is mounted by using a first material having a predetermined strength;
forming an auxiliary member (4B) that is thicker than the main member by using a second material having a smaller specific gravity than the first material;
jointing the auxiliary member around the hole of the main member;
assembling the main member into a predetermined shape by bending the main member;
forming in the auxiliary member an insertion hole (500) through which a fastening member for fastening the object to be connected is inserted;
shaping a surface of the auxiliary member; and
tapping for forming an internal thread (501) in the insertion hole.

12. The manufacturing method of the connection member according to claim 11, wherein
the main member is a high tension steel plate formed of the first material whose main component is iron,
the auxiliary member is an aluminum ring (51, 52) formed of the second material whose main component is aluminum, and
the jointing includes welding the aluminum ring to the high tension steel plate.

## Patentansprüche

1. Verbindungselement (4), aufweisend:
ein Hauptelement (4A), das durch Biegen einer Platte, die aus einem ersten Material mit einer bestimmten Festigkeit hergestellt ist, in eine vorbestimmte Form gebildet ist und eine Öffnung (401, 402) aufweist, in welcher ein zu verbindender Gegenstand montiert ist; und
ein Hilfselement (4B), das dicker als das Hauptelement ausgebildet ist, um die Öffnung des Hauptelements herum verbunden ist und eine Einsetzöffnung (500) aufweist, durch welche hindurch ein Befestigungselement zum Befestigen des zu verbindenden Gegenstandes eingesetzt ist, **dadurch gekennzeichnet, dass**
das Hilfselement (4B) aus einem zweiten Material mit einer geringeren relativen Dichte als das erste Material gebildet ist.

2. Verbindungselement nach Anspruch 1, wobei
das Hauptelement aus einer hochfesten Stahlplatte gebildet ist, die aus dem ersten Material gebildet ist, dessen Hauptkomponente Eisen ist,
das Hilfselement ein Ringelement (51, 52) ist, das aus dem zweiten Material gebildet ist, dessen Hauptkomponente Aluminium ist, und
das Hilfselement mit dem Hauptelement verschweißt ist.

3. Verbindungselement nach Anspruch 1 oder 2, wobei
das Hauptelement eine erste Primärfläche (41), eine zweite Primärfläche (42) und einen gebogenen Abschnitt (43) aufweist, der die erste Primärfläche mit der zweiten Primärfläche verbindet, und
jede von der ersten Primärfläche und der zweiten Primärfläche mit der Öffnung versehen ist.

4. Verbindungselement nach Anspruch 3, wobei der gebogene Abschnitt aufweist
einen Erhebungsabschnitt (431), der sich von der ersten Primärfläche im Wesentlichen orthogonal zu der ersten Primärfläche und im Wesentlichen parallel zu der zweiten Primärfläche erstreckt, und
einen Seitenabschnitt (432), der sich von der zweiten Primärfläche im Wesentlichen orthogonal zu der zweiten Primärfläche und im Wesentlichen parallel zu der ersten Primärfläche erstreckt.

5. Verbindungselement nach Anspruch 4, wobei eine Verbindungsöffnung (44) derart ausgebildet ist, dass sie von dem Erhebungsabschnitt zu dem Seitenabschnitt reicht.

6. Verbindungselement nach einem der Ansprüche 3 bis 5, ferner aufweisend einen linken und einen rechten Verbindungsabschnitt (45), die an einem linken und einem rechten Rand der ersten Primärfläche im Wesentlichen orthogonal zu dem linken und dem rechten Rand vorgesehen sind, wobei vordere Enden der Verbindungsabschnitte mit einer Rückfläche der zweiten Primärfläche verbunden sind.

7. Verbindungselement nach Anspruch 2, wobei das Ringelement derart verbunden ist, dass es die Öffnung umgibt.

8. Verbindungselement nach einem der Ansprüche 1 bis 7, wobei das Befestigungselement eine Schraube (6) ist, und ein Innengewinde (501) in der Einsetzöffnung des Hilfselements ausgebildet ist.

9. Verbindungselement nach einem der Ansprüche 1 bis 8, wobei der zu verbindende Gegenstand ein Aktuator (3) ist, der beides oder eines von einem Motor und einem Untersetzungsgetriebe aufweist.

10. Roboter (10), aufweisend:
das Verbindungselement nach Anspruch 9; und
eine Mehrzahl von Armelementen, die über das Verbindungselement miteinander verbunden sind.

11. Verfahren zur Herstellung eines Verbindungselements, wobei das Herstellungsverfahren aufweist:
Bilden eines Hauptelements (4A) einer vorbestimmten Form mit einer Öffnung (401, 402), in welcher ein zu verbindender Gegenstand montiert wird, mittels eines ersten Materials mit einer vorbestimmten Festigkeit;
Bilden eines Hilfselements (4B), das dicker als das Hauptelement ist, mittels eines zweiten Materials mit einer geringeren relativen Dichte als das erste Material;
Verbinden des Hilfselements um die Öffnung des Hauptelements herum;
Montieren des Hauptelements in eine vorbestimmte Form durch Biegen des Hauptelements;
Bilden einer Einsetzöffnung (500), durch welche hindurch ein Befestigungselement zum Befestigen des zu verbindenden Gegenstandes eingesetzt wird, in dem Hauptelement;
Formen einer Fläche des Hilfselements; und
Gewindeschneiden zum Bilden eines Innengewindes (501) in der Einsetzöffnung.

12. Verfahren zur Herstellung des Verbindungselements nach Anspruch 11, wobei
das Hauptelement eine hochfeste Stahlplatte ist, die aus dem ersten Material gebildet ist, dessen Hauptkomponente Eisen ist,
das Hilfselement ein Aluminiumring (51, 52) ist, der aus dem zweiten Material gebildet ist, dessen Hauptkomponente Aluminium ist, und
das Verbinden ein Verschweißen des Aluminiumringes mit der hochfesten Stahlplatte umfasst.

## Revendications

1. Elément de raccordement (4) comprenant :
un élément principal (4A) formé en cintrant une plaque réalisée à partir d'un premier matériau ayant une certaine résistance en une forme prédéterminée, et ayant un trou (401, 402) sur lequel un objet à raccorder est monté ; et
un élément auxiliaire (4B) formé de manière plus épaisse que l'élément principal, articulé autour du trou de l'élément principal, et ayant un trou d'insertion (500) à travers lequel un élément de fixation pour fixer l'objet à raccorder est inséré, **caractérisé en ce que** :
l'élément auxiliaire (4B) est formé avec un second matériau ayant une gravité spécifique inférieure au premier matériau.

2. Elément de raccordement selon la revendication 1, dans lequel :
l'élément principal est formé à partir d'une plaque en acier à haute résistance formée avec un premier matériau dont le composant principal est le fer,
l'élément auxiliaire est un élément annulaire (51, 52) formé avec un second matériau dont le composant principal est l'aluminium, et
l'élément auxiliaire est soudé à l'élément principal.

3. Elément de raccordement selon la revendication 1 ou la revendication 2, dans lequel :
l'élément principal a une première surface principale (41), une seconde surface principale (42), et une partie cintrée (43) raccordant la première surface principale à la seconde surface principale, et
chacune parmi la première surface principale et la seconde surface principale est formée avec un trou.

4. Elément de raccordement selon la revendication 3, dans lequel la partie cintrée comprend :
une partie montante (431) s'étendant à partir de la première surface principale de manière sensiblement orthogonale à la première surface principale et sensiblement parallèle à la seconde surface principale, et
une partie latérale (432) s'étendant à partir de la seconde surface principale de manière sensiblement orthogonale à la seconde surface principale et sensiblement en parallèle à la première surface principale.

5. Elément de raccordement selon la revendication 4, dans lequel un trou de raccordement (44) est formé afin d'aller de la partie montante à la partie latérale.

6. Elément de raccordement selon l'une quelconque des revendications 3 à 5, comprenant en outre des parties de raccordement gauche et droite (45) prévues sur les côtés gauche et droit de la première surface principale afin d'être sensiblement orthogonales aux bords gauche et droit, dans lequel les extrémités avant des parties de raccordement sont raccordées à une surface arrière de la seconde surface principale.

7. Elément de raccordement selon la revendication 2, dans lequel l'élément annulaire est articulé pour entourer le trou.

8. Elément de raccordement selon l'une quelconque des revendications 1 à 7, dans lequel l'élément de fixation est un boulon (6) et un filetage interne (501) est formé dans le trou d'insertion de l'élément auxiliaire.

9. Elément de raccordement selon l'une quelconque des revendications 1 à 8, dans lequel l'objet à raccorder est un actionneur (3) comprenant les deux ou l'un parmi un moteur et un engrenage réducteur.

10. Robot (10) comprenant :
un élément de raccordement selon la revendication 9 ; et
une pluralité de bras raccordés via l'élément de raccordement.

11. Procédé de fabrication d'un élément raccordement, le procédé de fabrication comprenant les étapes consistant à :
former un élément principal (4A) de forme prédéterminée ayant un trou (401, 402) sur lequel un objet à raccorder est monté en utilisant un premier matériau ayant une résistance prédéterminée ;
former un élément auxiliaire (4B) qui est plus épais que l'élément principal en utilisant un second matériau ayant une gravité spécifique inférieure à celle du premier matériau ;
articuler un élément auxiliaire autour du trou de l'élément principal ;
assembler l'élément principal en une forme prédéterminée en cintrant l'élément principal ;
former dans l'élément auxiliaire un trou d'insertion (500) à travers lequel est inséré un élément de fixation pour fixer l'objet à raccorder ;
former une surface de l'élément auxiliaire ; et
effectuer un taraudage pour former un filetage interne (501) dans le trou d'insertion.

12. Procédé de fabrication de l'élément de raccordement selon la revendication 11, dans lequel :
l'élément principal est une plaque en acier à haute résistance formée avec le premier matériau dont le composant principal est le fer,
l'élément auxiliaire est un anneau en aluminium (51, 52) formé avec le second matériau dont le composant principal est l'aluminium ; et
l'assemblage comprend le soudage de l'anneau d'aluminium à la plaque en acier à haute résistance.
